# EUROPEAN PATENT SPECIFICATION

(11) **EP 4 060 286 B1**
(45) Date of publication and mention of the grant of the patent: **11.06.2025**
(21) Application number: 22162929.8
(22) Date of filing: 18.03.2022
(51) Int. Cl.: G01C 15/00, E02F 9/26

(54) **SURVEYING SYSTEM, SURVEYING METHOD, AND SURVEYING PROGRAM**
VERMESSUNGSSYSTEM, VERMESSUNGSVERFAHREN UND VERMESSUNGSPROGRAMM
APPAREIL, PROCÉDÉ ET PROGRAMME DE RELEVÉ

(30) Priority: 19.03.2021 JP 2021045487; 30.09.2021 JP 2021160941
(43) Date of publication of application: 21.09.2022
(73) Proprietor: Topcon Corporation, Tokyo 174-8580 (JP)
(72) Inventor: SASAKI, Takeshi, Tokyo, 1748580 (JP)
(74) Representative: Schmitt-Nilson Schraud Waibel Wohlfrom Patentanwälte Partnerschaft mbB

(56) References cited:
- EP-A1- 3 415 866
- EP-A1- 3 680 395
- WO-A1-2019/159687
- WO-A2-2018/055449
- DE-U1- 202015 102 019
- MAAR HANNES ET AL: "Leica Nova MS60 White paper", 1 August 2017 (2017-08-01), XP055874203, Retrieved from the Internet <URL:https://leica-geosystems.com/products/total-stations/multistation/leica-nova-ms60> [retrieved on 20211217]

## Description

The present disclosure relates to a surveying system, a surveying method, and a surveying program.

In recent years, construction utilizing an ICT technology has been performed at a construction site. There has been a demand for efficient and labor-saving work by the ICT technology, including measures against shortage of manpower and the recent epidemic.

As a system for acquiring three-dimensional data on landforms, planimetric features, etc. by means of such an ICT technology, a system has been known, which measures an object from multiple points by means of a ground-based three-dimensional scanner device, acquires three-dimensional point cloud data, and displays such data on a terminal (Japanese Unexamined Patent Publication No. 2020-56616).

Maar Hannes ET AL ("Leica Nova MS60 White paper", 1 August 2017, XP055874203) discloses a measurement device named "Leica Nova MS60".

EP 3 680 395 A1 discloses a work machine that, while reducing a load on an operator during excavation work for generating a target surface, can prevent an excavation amount from being more or less than a target excavation amount (limit volume) regardless of an excavation distance.

WO 2019/159687 A1 and EP 3 415 866 A1 disclose surveying systems acquiring three dimensional point cloud data of a scene wherein regions where the acquired point cloud density is insufficient are determined and notified to a user.

For the three-dimensional point cloud data, measurement needs to be repeated until the three-dimensional point cloud data satisfies a necessary amount. As a method for acquiring the three-dimensional point cloud data, a method of checking distribution in a virtual space is mainly employed. However, in the case of only checking on the virtual space, it is very complicated to check where the three-dimensional point cloud data is lacking in the field and perform further measurements.

From the foregoing, it is an objective of the present disclosure to provide a surveying system, a surveying method, and a surveying program that are capable of acquiring data so as to complement an area not satisfying a necessary amount of three-dimensional point cloud data in a surveying system of measuring point clouds in a three-dimensional space.

The invention is defined in the independent claims and various aspects of the invention are disclosed in the dependent claims, the description, and the drawings.

According to the present disclosure, the three-dimensional point cloud data can be efficiently acquired, and if there is any missing data at a certain point, the data can be acquired only from the point, thereby reducing the number of times of measurement and movement. Moreover, the data can also be automatically acquired when the surveying device is mounted on a moving object.

According to the embodiments of the present disclosure, the scanner device or scanner unit may rotationally irradiate laser pulsed light through a scanning unit, scans a measuring object, and performs a distance measurement and an angle measurement by each pulsed light so as to acquire three-dimensional point cloud data of the measuring object or range in a coordinate system centered at the scanner device.

According to the embodiments of the present disclosure, point cloud data with respect to an observation point for which a scanner direction angle, coordinates in the map coordinate system, point cloud data have been obtained, may be successively converted into data in the map coordinate system, and displayed on the display device, so that progress of point cloud data acquisition can be checked on the map in real time. Therefore, a point cloud data acquisition status can be easily grasped. In addition, for example, even when data deficiency occurs, a proper response can be made on-site without re-measurements.

The map on which data are projected is not limited to an illustration map, and may be displayed as an aerial photo associated with map coordinates.

It is also possible that acquired point cloud data is three-dimensionally displayed as 3D data and displayed side by side with the map so that a point cloud data acquisition status can be three-dimensionally grasped. Alternatively, a configuration is also possible in which a scope that moves in an interlocking manner on upper and lower screens in response to dragging with a mouse or a swipe with a finger, is displayed, and by specifying a position and a direction with the scope, three-dimensional point cloud data as viewed from the scope can be displayed.

FIG. 1 shows a configuration of a surveying system according to an embodiment of the present disclosure.
FIG. 2 shows a configuration of a system of an example where a surveying device is mounted on a moving object.
FIG. 3 shows a network configuration of the surveying system of the present disclosure.
FIG. 4 is a sequence diagram showing a processing flow of the embodiment of the present disclosure.
FIG. 5 shows an example of a screen displayed on a terminal display unit of an information processing device.
FIG. 6 shows an example of a screen displayed on the terminal display unit of the information processing device.
FIG. 7 shows an example of a screen displayed on the terminal display unit of the information processing device.
FIG. 8 shows an example of a screen displayed on the terminal display unit of the information processing device.
FIG. 9 shows an example of a screen displayed on the terminal display unit of the information processing device.
FIG. 10 is a sequence diagram showing a processing flow of the embodiment of the present disclosure.

### <Outline>

For example, at an outdoor site for civil engineering work etc., measurements are performed using a surveying device such as a three-dimensional scanner in order to grasp sequential statuses such as a status before the start of the work, a status at the state of the work, and a necessary amount of three-dimensional point cloud data is acquired. Such an acquisition of data is repeatedly performed until the necessary amount of three-dimensional point cloud data can be acquired from all areas and locations in an area to be managed. Whether or not the necessary amount of three-dimensional point cloud data has been acquired can be checked using, for example, a surveying system including an information processing device and a surveying device.

When the three-dimensional point cloud data is insufficient, it is necessary to grasp a location for which the three-dimensional point cloud data is insufficient based on information from an image and the like output on a display of the information processing device, more specifically a smartphone, a tablet, or a PC which can be viewed by an operator at hand, and necessary for the operator to move to the location to perform a measurement by the three-dimensional scanner device. As a result, a personal burden at the work is high in two aspects: moving to the area where point clouds are insufficient; and measuring point clouds after grasping the direction where point clouds are insufficient.

As another problem, there has been a demand for reflection of the latest status on the construction status for grasping such a status. For example, a landform has been changed at a location where a construction machine has dug the ground on the previous day, and it is necessary to newly perform a measurement on such a location to acquire the three-dimensional point cloud data. As described above, there has been a demand for updating the three-dimensional point cloud data to the latest status, and further for reducing a burden on the updating the status as much as possible.

As measures against each aspect of the above-described event, inventors of the present disclosure have conceived of the concept of complementary scanning for point clouds, and have arrived at the following idea. If there is any missing point clouds at a certain location, automatic measurement is performed for such a location, or data is acquired only for such a location by a scanner while a moving object on which the scanner is mounted is moving or stopped, to reduce the number of times of measurement and movement, whereby the three-dimensional point cloud data can be more efficiently acquired.

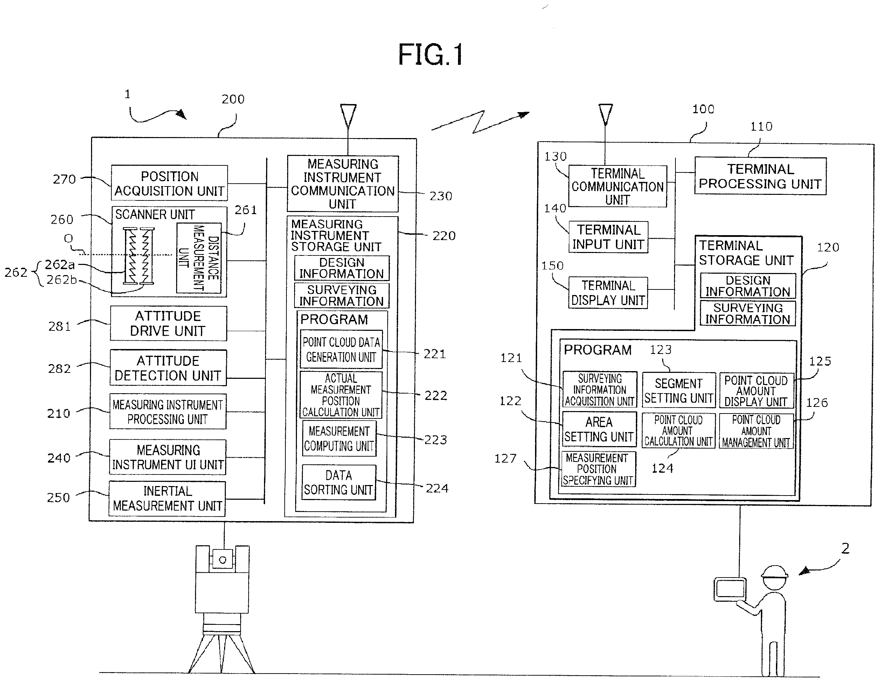

An embodiment of the present disclosure will be described below with reference to the drawings. FIG. 1 shows a configuration of a surveying system according to an embodiment of the present disclosure.

### <Configuration of System>

A surveying system 1 includes an information processing device 100 used by an operator 2 and a surveying device 200. The operator 2 uses the surveying system 1 having these components to acquire three-dimensional point cloud data and check the data in an outdoor place such as a civil engineering work site, for example.

An example of the surveying device 200 for measuring a landform to acquire the three-dimensional point cloud data is a three-dimensional scanner device, more specifically a three-dimensional laser scanner device. The surveying device 200 includes a measuring instrument storage unit 220, a scanner unit 260, an attitude drive unit 281, an attitude detection unit 282, an inertial measurement unit 250, a measuring instrument UI unit 240, a measuring instrument communication unit 230, a measuring instrument processing unit 210, and a position acquisition unit 270, and these components are electrically connected and controlled. In addition, although not shown, the surveying device 200 may include a camera unit that captures a panoramic photograph at the site, for example.

The measuring instrument storage unit 220 is a storage device using a memory or a magnetic disk, and stores various types of design information etc. at the site. The design information includes, for example, building information modeling (BIM). Note that the design information is not limited to the BIM and may be, for example, three-dimensional CAD data. Further, the design information may be an image drawing which is an image file with a scale.

The scanner unit 260 is, for example, a laser scanner, and has a distance measurement unit 261 and a deflection unit 262. The distance measurement unit 261 has the function of emitting laser light as distance measurement light and receiving the reflected light to measure a distance and an angle within a measurement area. The deflection unit 262 has the function of deflecting the distance measurement light in a desired direction.

A more specific example of the laser scanner is a laser scanner using a Risley prism as the deflection unit 262. In this case, the deflection unit 262 is provided closer to an object side than the distance measurement unit 261 is to the object side, and has a pair of Risley prisms 262a, 262b. Each of the Risley prisms 262a, 262b in pair has an uneven surface on one side and a smooth surface on the other side, and the Risley prisms 262a, 262b are arranged such that their uneven surfaces face each other. Further, each of the Risley prisms 262a, 262b is provided with a motor (not shown) capable of detecting a rotation angle so that the Risley prisms 262a, 262b can relatively rotate about a center axis O. Accordingly, the pair of Risley prisms 262a, 262b can deflect the distance measurement light in any direction, and can cause the distance measurement unit 261 to receive the reflected light returning from the direction. In addition, by detection of the rotation angle of the motor, a distance in which the measurement light is emitted, and a distance in which the reflected light is received can be detected.

The attitude drive unit 281 is an actuator that rotatably drives the scanner unit 260 horizontally and vertically. The orientation of the scanner unit 260 can be changed by drive of the attitude drive unit 281.

The attitude detection unit 282 is a rotation angle sensor (an encoder) capable of detecting a horizontal angle and a vertical angle of the scanner unit 260 driven by the attitude drive unit 281. Further, the attitude detection unit 282 may have an inclination measuring instrument (a tilt sensor) that detects an angle such as the inclination angle of the surveying device 200. The attitude detection unit 282 can detect an orientation of the scanner unit 260.

The measuring instrument UI unit 240 is a user interface (UI) for operation of the surveying device 200 by the operator 2, and includes an input section which is a button or a touch panel for setting and operation for measurement by the scanner unit 260 and drive of the attitude drive unit 281 and a display section which is a display capable of displaying various pieces of information such as a virtual space based on the design information stored in the measuring instrument storage unit 220, results of measurement by the scanner unit 260, and the results of analysis by the measuring instrument processing unit 210.

The measuring instrument communication unit 230 is a communication instrument capable of communicating with at least various information terminals. For example, the measuring instrument communication unit 230 may be a communication instrument connectable to a network such as the Internet or an instrument connected to the information processing device 100 in a wireless or wired manner to communicate with the information processing device 100.

The position acquisition unit 270 has the function of acquiring the position of the surveying device 200 itself (referred to as a self-position for differentiation from a measurement position) when the surveying device 200 is stopped or while the surveying device 200 is moving. Specifically, the position acquisition unit 270 has, for example, the function of acquiring the position the surveying device 200 through installation of the surveying device 200 itself at an instrument point, and surveys a target, such as a retroreflective prism, installed at a known position so that the position of the surveying device 200 itself can be acquired. Alternatively, the position acquisition unit 270 may be a global navigation satellite system (GNSS) receiver.

The inertial measurement unit 250 is a sensor unit including a sensor device such as a 3-axis acceleration sensor or angular velocity sensor, and can measure the acceleration and angular velocity of the surveying device 200 itself. With this configuration, the vibration amount of the surveying device 200 can be measured in real time.

The measuring instrument processing unit 210 serves as a central processing unit that performs various controls in the surveying device 200, and as functions implemented by programs stored in the measuring instrument storage unit 220, has a point cloud data generation unit 221, an actual measurement position calculation unit 222, a measurement computing unit 223, and a data sorting unit 224.

The point cloud data generation unit 221 has the function of generating the three-dimensional point cloud data from a distance from each distance measurement point (each point cloud) measured by the scanner unit 260 and the horizontal and vertical angles detected by the attitude detection unit 282.

Further, the point cloud data generation unit 221 can generate the three-dimensional point cloud data in a horizontal state based on the angle of the surveying device 200 detected by the attitude detection unit 282 and the vibration amount measured in real time by the inertial measurement unit 250. For example, the point cloud data generation unit 221 has the function of avoiding generation of the point cloud data based on results measured when the vibration amount is greater than a predetermined value and generating the point cloud data based on results measured when the vibration amount is less than the predetermined value. Further, the three-dimensional point cloud data can be, upon measurement, stored in association with the vibration amount.

The actual measurement position calculation unit 222 has the function of calculating the position of actual measurement of the three-dimensional point cloud data generated by the point cloud data generation unit 221. That is, the three-dimensional point cloud data can be stored in association with not only the position of the point cloud associated with each point cloud of the three-dimensional point cloud data, but also the position and self-position of the surveying device 200 having surveyed such a point cloud.

Using information on the measurement position instructed by a measurement position specifying unit 127 to be described later and information on the self-position of the surveying device 200 itself acquired by the position acquisition unit 270, the measurement computing unit 223 calculates a difference between the measurement position and the self-position. Then, the measurement computing unit 223 performs computation comprehensively considering a drive amount and a deflection amount, such as the direction in which the attitude of the surveying device 200 is directed by rotary drive of the surveying device 200 and direction of the distance measurement light set by the deflection unit 262 in order to measure the specified measurement position with respect to a current attitude at the self-position. The surveying device 200 is driven and deflected based on the drive direction, the drive amount, the deflection direction, and the deflection amount computed accordingly, so that the surveying device 200 can perform surveying with the surveying device 200 directed to a position targeted for the measurement.

The data sorting unit 224 can delete and discard data where a vibration amount associated with the three-dimensional point cloud data generated by the point cloud data generation unit 221 is greater than the predetermined value, or can extract, save, and store data where the vibration amount is less than the predetermined value.

The surveying device 200 may have other surveying functions. For example, the surveying device 200 may have a three-dimensional scanner function at a total station (TS). Alternatively, the surveying device 200 may have a movement function of autonomously traveling in a predetermined route, or may be configured so that a movement path can be controlled by remote control. Examples of a moving object include a vehicle, a robot, and an unmanned aerial vehicle (UAV). The vehicle also includes a construction machine that travels in the site, that is a so-called heavy machine. Examples of the construction machine include a shovel, a wheel loader, a dump truck, a bulldozer, a motor grader, and a vibration roller.

Examples of the information processing device 100 include a smartphone, a feature phone, a tablet, a handheld computer device (e.g., a personal digital assistant (PDA)), and a wearable terminal (e.g., a glasses-type device or a watch-type device). A general-purpose terminal with application software installed is usable as the information processing device 100 of this embodiment. Such an information processing device 100 includes a terminal display unit 150, and is portable and can be easily carried to the construction site. The terminal display unit 150 may be viewed hands-free or by holding it with one hand. The terminal display unit 150 may also include an internal power supply such as a battery and may thus be operated for a certain period of time without requiring an external power supply.

The information processing device 100 includes a terminal communication unit 130, a terminal storage unit 120, a terminal processing unit 110, a terminal input unit 140, and the terminal display unit 150.

Although not shown, the terminal processing unit 110 executes the functions and/or methods implemented by codes or commands included in the programs stored in the terminal storage unit 120. Examples of the terminal processing unit 110 include a central processing unit (CPU), a microprocessor unit (MPU), a graphics processing unit (GPU), a microprocessor, a processor core, a multiprocessor, an application specific integrated circuit (ASIC), and a field-programmable gate array (FPGA). The terminal processing unit 110 may include a logic circuit or a dedicated circuit formed in an integrated circuit, for example, to execute the processing disclosed in the embodiment. These circuits may be implemented as one or more integrated circuits. A single integrated circuit may execute the multiple types of processing described in the embodiment. Although not shown, the terminal processing unit 110 may include a main storage unit that temporarily stores the programs read out from the terminal storage unit 120 and provides a workspace to the terminal processing unit 110.

The terminal communication unit 130 is communicative with the measuring instrument communication unit 230 of the surveying device 200, and can receive the three-dimensional point cloud data measured and calculated by the surveying device 200 and the position information on the surveying device 200. The actual measurement position information for the three-dimensional point cloud data may be computed by the surveying device 200 or the information processing device 100. The communications may be established wired or wirelessly. As long as mutual communications are established, any communication protocol may be used.

The terminal input unit 140 is any one or a combination of all types of devices capable of receiving inputs from a user, i.e., the operator 2, and transmits the information related to the inputs to the terminal processing unit 110. Examples of terminal input unit 140 include, in addition to a hardware input means such as buttons, a software input means displayed on a display unit such as a touch panel, and an audio input means such as a remote controller or a microphone.

The terminal display unit 150 is any one or a combination of all types of devices capable of displaying a screen. Examples of terminal display unit 150 include a flat display such as a liquid crystal display or an organic light-emitting diode (OLED) display, a curved display, a folding screen on a foldable terminal, a head-mounted display, and a device displayable through projection on an object using a small projector.

The terminal storage unit 120 functions to store various necessary programs or various data. In addition, the terminal storage unit 120 can store surveying information (the three-dimensional point cloud data, the position information on the surveying device 200) received by the terminal communication unit 130. For example, the terminal storage unit 120 stores the design information including the information (e.g., the altitude) on the ground used at a construction site or the design information on a slope. The terminal storage unit 120 is any of various storage media such as a hard disk drive (HDD), a solid state drive (SSD), and a flash memory.

The design information includes design drawings necessary for construction works. Examples of the construction works include constructions of structures such as buildings, roads, railroads, tunnels, bridges, ditches, waterways, and rivers. The design drawings include plan views, longitudinal sectional views, and transverse sectional views; and the linear data, the point data, and the positions, coordinates, and altitudes of the points and line segments included in the views.

The terminal storage unit 120 stores, as application software programs, a surveying information acquisition unit 121, an area setting unit 122, a segment setting unit 123, a point cloud amount calculation unit 124, a point cloud amount display unit 125, a point cloud management unit 126, and the measurement position specifying unit 127 that fulfil various functions. The terminal storage unit 120 may store the programs for implementing the functions of the point cloud data generation unit 221 and the actual measurement position calculation unit 222, stored in the surveying device 200, and the functions may be implemented by execution of these programs in the terminal processing unit 110.

The surveying information acquisition unit 121 has the function of acquiring, from the surveying device 200, the surveying information including the point cloud data associated with the position information and the self-position information on the surveying device 200. More specifically, the three-dimensional point cloud data is generated in the point cloud data generation unit 221 by measurement using the scanner unit 260 of the surveying device 200. In the actual measurement position calculation unit 222, the point cloud position information is added to and associated with each point cloud of the three-dimensional point cloud data. The point cloud data associated with the position information is acquired through communication between the measuring instrument communication unit 230 and the terminal communication unit 130.

The area setting unit 122 has the function of setting a point cloud amount management area. More specifically, a predetermined area on the map of the construction site is set as the management area where the point cloud amount needs to be managed. The area may be set in such a manner that the operator 2 makes an input to specify the point cloud amount management area by using the terminal input unit 140 of the information processing device 100 or in such a manner that the area setting unit 122 reads management area information included in the design information and the like stored in the terminal storage unit 120. Alternatively, the area may be set using, e.g., software for managing the site. The software can be installed and executed on a predetermined information processing management server that the information processing device 100 can access by communicating with the terminal communication unit 130. The management area can be, for example, specified by a boundary surrounding the management area and separating between the inside and outside of the management area on the map. Further, the management area is set on the map, and provided with the position information on the map so that the management area can be displayed in association with the map or a design drawing.

The segment setting unit 123 has the function of dividing the management area into predetermined unit segments. More specifically, the management area set by the area setting unit 122 is divided into a plurality of unit segment groups divided by predetermined unit area segments. A most typical example is, but not limited to, division into square segments with the same area, i.e., grid units. In addition to the square shape, all shapes in which the management area can be divided into a plurality of continuous unit segments with no clearance, such as a hexagonal shape or a triangular shape, can be employed. The size of each unit segment can also be freely set. Each unit segment crossing the boundary may include one outside the boundary and one in a partially missing shape so as not to be outside the boundary. The position information is provided to each unit segment by using the position information, which is provided to the management area, on the map.

The point cloud amount calculation unit 124 has the function of calculating the point cloud amount included in each space as the unit segment. More specifically, the point cloud amount calculation unit 124 compares the position information on each unit segment with the position information associated with the acquired three-dimensional point cloud data so that the point cloud amount included in the space of each unit segment can be calculated. The "point cloud amount" is a quantitative indicator regarding a point cloud, including the number of point clouds, the number of point clouds per unit area, the number of point clouds per unit volume, the average of altitude values of point clouds included in a unit segment, and other statistics. The point cloud amount is not limited merely to the number of point clouds. Only point clouds under predetermined conditions may be targeted for the calculation of the point cloud amount. Specifically, only point clouds within a predetermined distance from the surveying device 200 may be targeted for the calculation, and for example, only point clouds within a 30-meter radius from the surveying device 200 may be provided for calculation. Alternatively, the point cloud amount calculation unit 124 may calculate the accuracy of the acquired point cloud data, and may provide only point clouds whose accuracy satisfies a predetermined accuracy, i.e., may exclude the three-dimensional point cloud data not satisfying the predetermined accuracy. The accuracy of the point cloud data may be calculated from, e.g., information on the specifications of the surveying device 200, comparison with point cloud data including an overlapping position, or a reflection intensity.

In addition, the point cloud amount calculation unit 124 may have the function of calculating the point cloud amount in a space within a predetermined altitude range for each unit segment. More specifically, the upper and lower limits of the altitude value are set, and the point cloud amount in a space within such an altitude range for each unit segment is calculated.

In addition, the point cloud amount calculation unit 124 may have the function of calculating the indicator (e.g., a sufficiency rate) regarding the sufficiency for a necessary point cloud amount in the management area or the unit segment. More specifically, the point cloud amount calculation unit 124 can read the necessary point cloud amount per unit segment from the design information in the terminal storage unit 120, and compare the necessary point cloud amount with an actually calculated point cloud amount to calculate the indicator regarding the sufficiency for the necessary point cloud amount. The indicator of the sufficiency for the necessary point cloud amount may be a sufficiency rate (e.g., "80% sufficient") with respect to the necessary point cloud amount or an insufficiency rate (e.g., "20% insufficient") with respect to the necessary point cloud amount. The sufficiency rate may be indicated by numbers, by levels such as high, medium, and low, or by only sufficiency or insufficiency for a predetermined threshold provided. Alternatively, the sufficiency rate may be calculated for all unit segments, and the sufficiency rate of the entire management area may be calculated. The sufficiency rate of the entire management area may be, for example, the average of the sufficiency rates of all unit segments, or may be obtained in such a manner that the number of unit segments satisfying, e.g., the necessary sufficiency rate is divided by the number of all unit segments.

The point cloud amount display unit 125 has the function of displaying each segment of the management area on the information processing device 100 according to the calculated point cloud amount for unit segment. More specifically, the segments of the management area can be displayed differently depending on the level of the point cloud amount so that the point cloud acquisition status such as the above-described calculated point cloud amount can be grasped. A most typical example is, but not limited to, color-coded displaying. For example, the unit segment with a high point cloud amount can be displayed in red, the unit segment with a low point cloud amount in blue, yellow in between in a color distribution.

The point cloud management unit 126 has the function of determining whether or not each segment of the management area has a point cloud amount satisfying a predetermined necessary point cloud amount. When a certain segment has the necessary point cloud amount, the measurement position specifying unit can instruct such a segment as a position for which the three-dimensional point cloud data needs to be acquired. More specifically, as in the above-described example, the predetermined threshold for the point cloud amount in the terminal storage unit 120 is used to determine whether the point cloud amount of each unit segment is sufficient or insufficient. The point cloud management unit 126 can display the indication of an insufficient point cloud amount of a certain unit segment on the terminal display unit 150 of the information processing device 100 so that such an insufficiency can be, as a so-called alert, provided to the operator 2.

In addition, the point cloud management unit 126 has the function of determining a position for which the three-dimensional point cloud data needs to be acquired and the status needs to be updated, based on working data received from a heavy machine work amount sensor to be described later. More specifically, when a work time is, for example, more recent than the time of acquisition of the already-stored and -saved three-dimensional point cloud data as a result of comparison with the time of acquisition of the three-dimensional point cloud data by using work position information and work time information in the working data, it is determined that the three-dimensional point cloud data is old data, and therefore, the measurement position specifying unit 127 can provide an instruction for newly acquiring the three-dimensional point cloud data at the work position.

The measurement position specifying unit 127 has the function of instructing, as the position targeted for the measurement, the position specified by the point cloud management unit 126 to the surveying device 200.

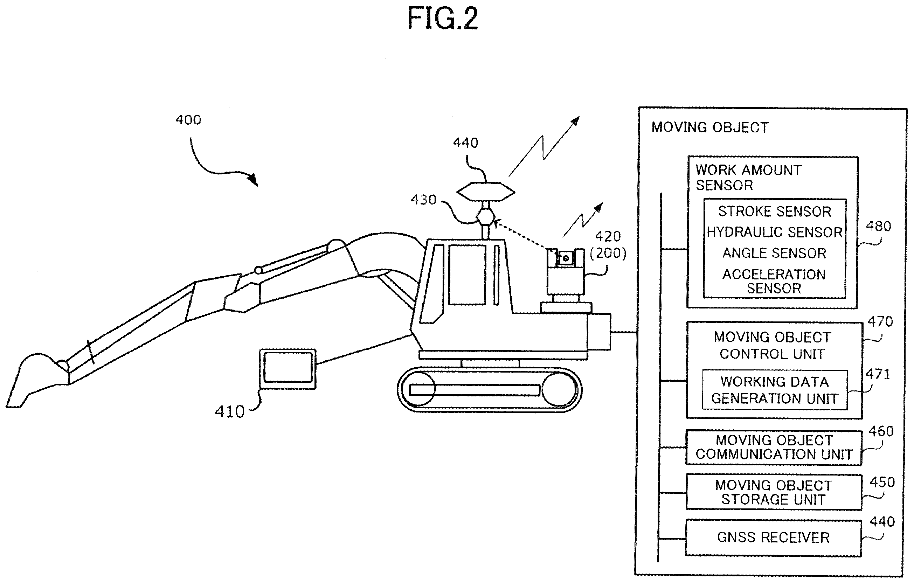

FIG. 2 is a diagram showing an example of the moving object in a case where the surveying device is mounted on the moving object to acquire the three-dimensional point cloud data. In the example of FIG. 2, the moving object 400 is a construction machine, and is more specifically, for example, a shovel among machine-controllable or -guidable construction machines. The shovel has a motor as a drive source for driving the shovel, and can move with caterpillars by rotation of the motor.

The moving object 400 may include, for example, a moving object terminal 410 as the information processing device and a surveying device 420, a target device 430, a GNSS receiver 440, a moving object storage unit 450, a moving object communication unit 460, a moving object control unit 470, and a work amount sensor 480 mounted on the moving object 400. These components are controlled with electrically connected to each other.

Although not shown, the moving object terminal 410 is, for example, an information processing device including a screen and an input device, and is placed on a seat of the moving object 400 to control part of operation of the moving object 400 so that a driver of the construction machine can grasp a work status. For example, the work status of the construction machine can be monitored according to the work amount sensed by the work amount sensor 480, or depending on equipment, the construction machine itself can be operated by the moving object terminal 410.

The surveying device 420 is similar to the surveying device 200 and is not limited to be located at a position shown in FIG. 2, and may be freely mounted on the front or back of the moving object 400 or at multiple points so that 360° measurement can be performed.

The target device 430 includes, for example, an optical element that reflects light emitted from the surveying device 420 to the surveying device 420 again, and the optical element is a so-called retroreflective prism. The GNSS receiver 440 receives and processes a positioning signal from a satellite such as a global positioning system (GPS), thereby measuring a distance between the satellite and the receiver and calculating the position from the distance. Both the GNSS receiver 440 and the target device 430 are placed at positions taken as the same position, and the difference in position of the surveying device 420 from the from the GNSS receiver 440 and the target device 430, i.e., a so-called offset, is measured by the surveying device 420 so that the self-position of the surveying device 420 can be acquired. An offset between the GNSS receiver 440 and the target device 430 is measured in advance.

The moving object communication unit 460 is, for example, a wireless communication modem, and can perform information communication with the terminal communication unit 130 of the information processing device 100, the measuring instrument communication unit 230 of the surveying device 200, or an information processing server.

The moving object control unit 470 is a controller, and can operate and control the moving object 400 which is the construction machine by using measurement information on various sensors of the work amount sensor 480.

The work amount sensor 480 includes sensors such as a stroke sensor, a hydraulic sensor, a tilt sensor, and an acceleration sensor. The moving object control unit 470 can generate the working data (work history data) on the moving object 400 which is the construction machine by using the measurement information on these sensors.

The working data includes, for example, the work time information and the work position information. The work position can be calculated using the position of the moving object 400 measured by the GNSS receiver 440 and a work tip end position calculated from the data sensed by each work amount sensor 480 and the known dimensions of each component of the moving object 400. Specifically, for example, in the case of the shovel, the work position of a tip end of a bucket and the like can be calculated using the known length of an arm, the three-dimensional coordinates of the position of rotation center of the arm, the rotation angle of the arm, and the like. These pieces of working data can be stored in the moving object storage unit 450, and can be transmitted to the information processing device 100 or the information processing server 300 via the moving object communication unit 460 and be stored therein.

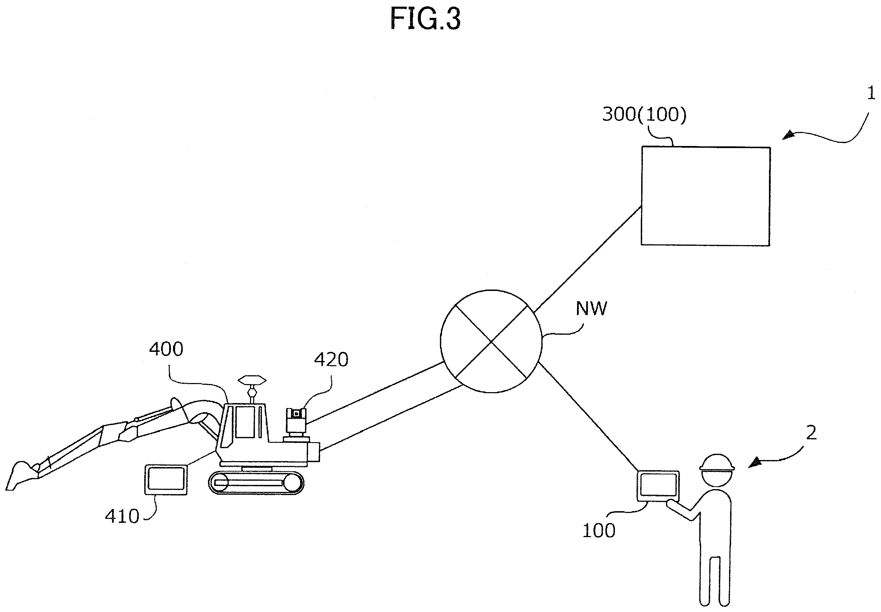

FIG. 3 is a network configuration diagram of an example where the surveying device 420 of the surveying system 1 is mounted on the moving object 400 and complementary scanning is performed while the moving object 400 is moving. The information processing server300 may be a server having a configuration similar to that of the information processing device 100 and therefore having functions equivalent to those of the information processing device 100, and regardless of an instruction from the information processing device 100 at the site, the three-dimensional point cloud data can be acquired according to a measurement instruction to the surveying device 420 from the information processing server 300 having the similar functions.

In FIG. 3, the surveying device 420, the moving object 400, and the information processing server 300 (the information processing device 100) are communicable with each other via a network NW. In this example, the moving object 400 does not necessarily move according to the instructions from the information processing device 100 and the information processing server 300 and a target for these instructions is the surveying device 420. As will be described later, the surveying device 420 is operated while the moving object 400 is moving to perform the work at the construction site or the moving object 400 is stopped so that the efficiency of measurement can be increased.

### <Flow of Processing>

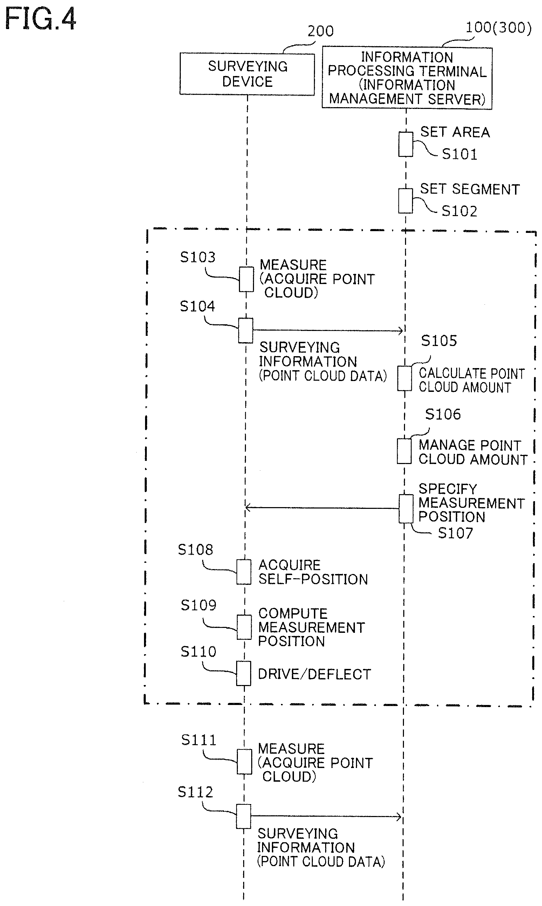

FIG. 4 is a flowchart illustrating a surveying method using the surveying system of the embodiment of the present disclosure and the flow of surveying program processing. In this example, an aspect will be mainly described, in which the measurement position is instructed based on the insufficiency of the point cloud amount managed by the surveying system 1. The flow of the processing in this example is applied to both a minimum unit operation where the surveying system 1 includes the information processing device 100 carried by the operator 2 and the surveying device 200 as shown in FIG. 1 and the operator 2 oneself moves the surveying device 200 at the site, and an operation performed when the surveying device 420 is mounted on the moving object 400 as shown in FIG. 3 and the surveying device 420 moves while the moving object 400 is moving at the site.

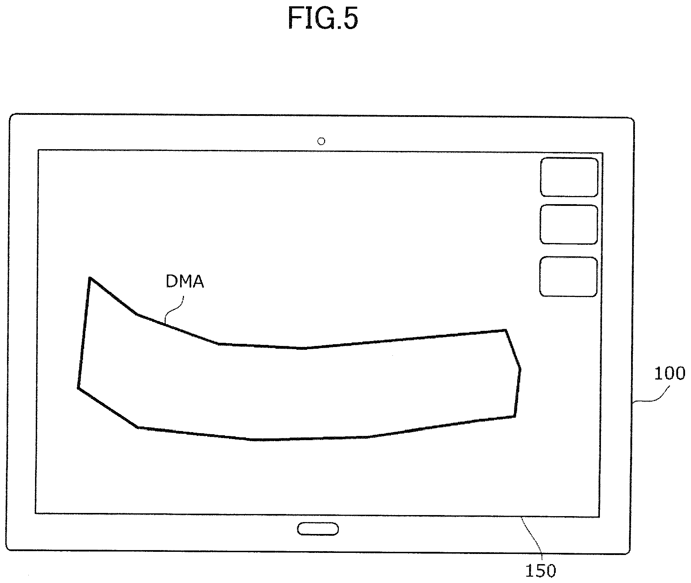

First, in Step S101, an area setting unit 122 sets a point cloud amount management area. FIG. 5 shows an example of a screen displayed on the terminal display unit 150 of the information processing device 100. In the example shown in FIG. 5, the information processing device 100 is a so-called tablet terminal, the terminal display unit 150 is, for example, a liquid crystal display or an OLED display, and the terminal input unit 140 is an input unit implemented by the touch panel functions of these displays. In FIG. 5, a map indication (not shown) such as a map or an aerial photograph is displayed on the terminal display unit 150. Referring to the map indication, the operator 2 inputs the management area onto the map indication, and the area setting unit 122 sets the management area based on such an input. The input may be made by various methods such as freely drawing a boundary with a finger or a touch pen, and setting two points on a diagonal line to set a rectangular area. In FIG. 5, the management area DMA is displayed on the map indication. At this time, the management area DMA is provided with the position information.

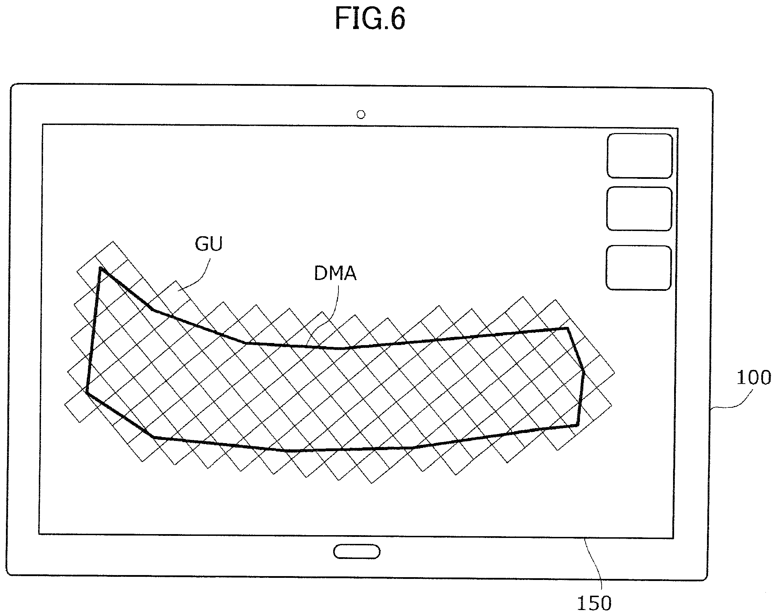

Next, in Step S102, the segment setting unit 123 divides the management area into predetermined unit segments. FIG. 6 shows another example of a screen displayed on the terminal display unit 150 of the information processing device 100. The displaying on the terminal display unit 150 is not necessary, but will be described for the sake of clarity in description. In the example shown in FIG. 6, the management area DMA is divided into a plurality of unit segments GU. For the sake of simplicity in illustration, unit segments are exaggeratedly oversized in FIG. 6, but it is actually easier to understand if the unit segments are expressed in high-definition in units of one dot or one pixel. Moreover, in FIG. 6, in a region where the boundary of the management area DMA cross the unit segments, the unit segments outside the boundary are displayed, but are not necessarily displayed. The acquired three-dimensional point cloud data can be managed regardless of whether or not the unit segments are within the management area.

In Step S103, the three-dimensional point cloud data is acquired by the surveying device 200. This step may be performed prior to Steps S101, S102.

In Step S104, the surveying information acquisition unit 121 acquires the surveying information including the point cloud data associated with the position information from the surveying device 200. The point cloud data may be acquired prior to area setting in Step S101 above and segment setting in Step S102 above.

In Step S105, the point cloud amount calculation unit 124 calculates the point cloud amount in the space for each unit segment. The point cloud amount is calculated for all unit segments described above.

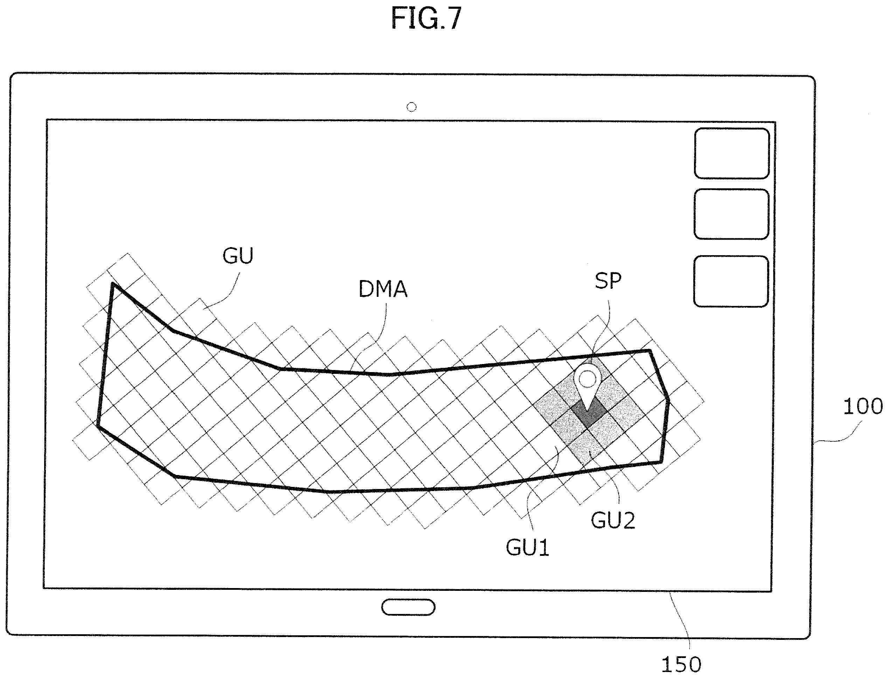

Here, the point cloud amount display unit 125 displays each segment of the management area on the information processing device 100 according to the calculated point cloud amount per unit segment. This processing is executed to make it easier for the operator 2 to grasp the work status, and may be omitted in this embodiment. FIG. 7 shows another example of a screen displayed on the terminal display unit 150 of the information processing device 100. In the example shown in FIG. 7, the surveying device 200 is placed in a unit segment at a position SP, and the point cloud amount for the position SP has been already acquired. Regarding the point cloud amount according to the three-dimensional point cloud data acquired at the surveying device position SP, the unit segments around the position SP are displayed in shades of colors according to the point cloud amount. No point clouds are actually acquired for the installation position of the surveying device 200 and the position right below the surveying device 200 and the point cloud amount is small at these positions, but in FIG. 7, the point cloud amount is displayed higher toward the surveying device position SP for the sake of simplicity in illustration. For example, a unit segment GU2 is displayed in a darker color than that of a unit segment GU1, so that it can be intuitively understood that the acquired point cloud amount is higher in the unit segment GU2. In this manner, the point cloud acquisition status can be simply displayed according to a color, and the management area can be viewed at once. The operator 2 thus can easily check whether or not a necessary point cloud amount is, as the three-dimensional point cloud data, acquired for each segment of the management area to be managed. Consequently, scanning can be efficiently performed at the site, and the status of scanning and the status of data acquisition can be visually checked.

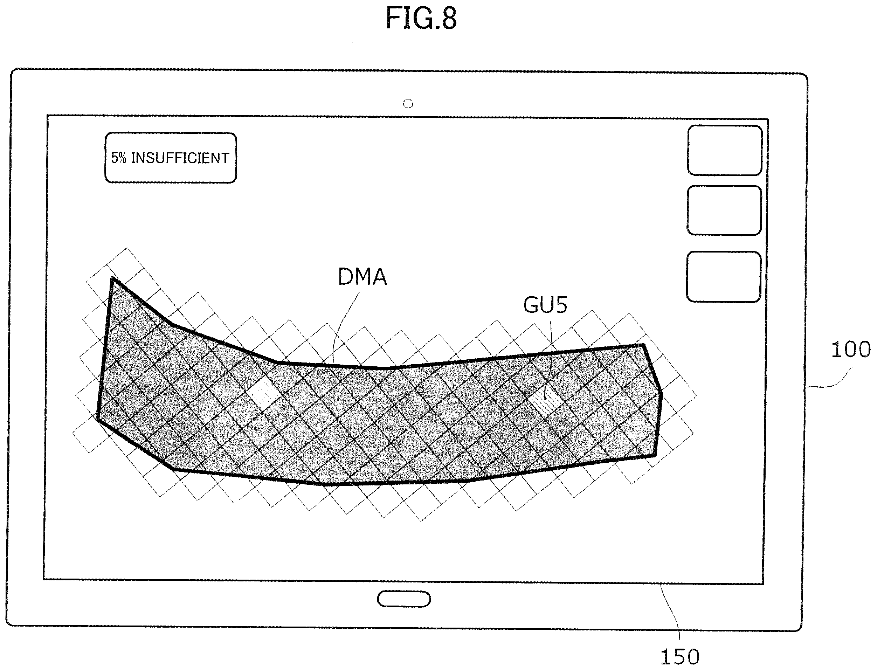

FIG. 8 shows an example of a screen displayed on the terminal display unit 150 of the information processing device 100 after acquisition of the three-dimensional point cloud data has progressed to a certain extent. The unit segments in the management area DMA shown in FIG. 8 show a high density across almost the entire area, but as indicated by "5% insufficient" on the upper left side on the screen, some segments show small point cloud amounts. For example, a unit segment GU5 is a unit segment where the point cloud amount is less than the necessary point cloud amount, and for differentiating such a unit segment from the other unit segments, the unit segment GU5 is hatched for alerting. Whether or not the point cloud amount has reached the necessary point cloud amount is determined by the point cloud management unit 126 based on the level of the point cloud amount in the unit segment as compared with the necessary point cloud amount stored in advance.

Here, as Step S106, the point cloud management unit 126 specifies the unit segment where the point cloud amount is less than the necessary point cloud amount, for example, the unit segment GU5, as the position targeted for the measurement. Then, in Step S107, the measurement position specifying unit 127 instructs, as the position targeted for the measurement, the unit segment GU5 to the surveying device 200.

In Step S108, the surveying device 200 specifies the self-position by the position acquisition unit 270. Then, in Step S109, the measurement computing unit 223 computes, from a relationship between the current self-position and the position targeted for the measurement, how the attitude and deflection direction of the surveying device 200 are to be changed by drive of the surveying device 200 itself. Based on the computation results, the surveying device 200 is driven and the scanner unit 260 is deflected in Step S110, and the three-dimensional point cloud data for the position targeted for the measurement is acquired in Step S111.

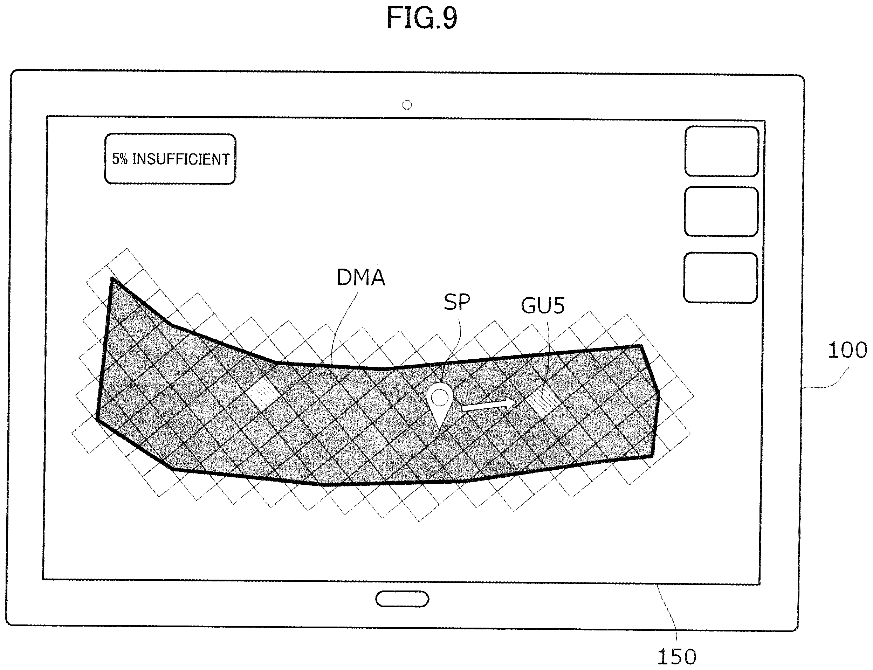

FIG. 9 shows an example of a screen displayed on the terminal display unit 150 of the information processing device 100. FIG. 9 shows an example of the screen that may be displayed so that the operator 2 can easily grasp the situation where the point clouds are measured in Step S111 above. In FIG. 9, the position of the surveying device 200 is indicated by the position SP, and it can be intuitively grasped that measurement is performed toward the unit segment GU5 as indicated by an arrow. In addition, in a case where the surveying device is mounted on the moving object, both the orientations of the moving object and the surveying device and the direction of measurement may be displayed.

The processing in steps S103 to S110 may be repeatedly executed until the point cloud amount in the management area reaches the necessary amount. The point cloud management unit 126 may determine whether or not the point cloud amount has reached the necessary amount, and may end the processing.

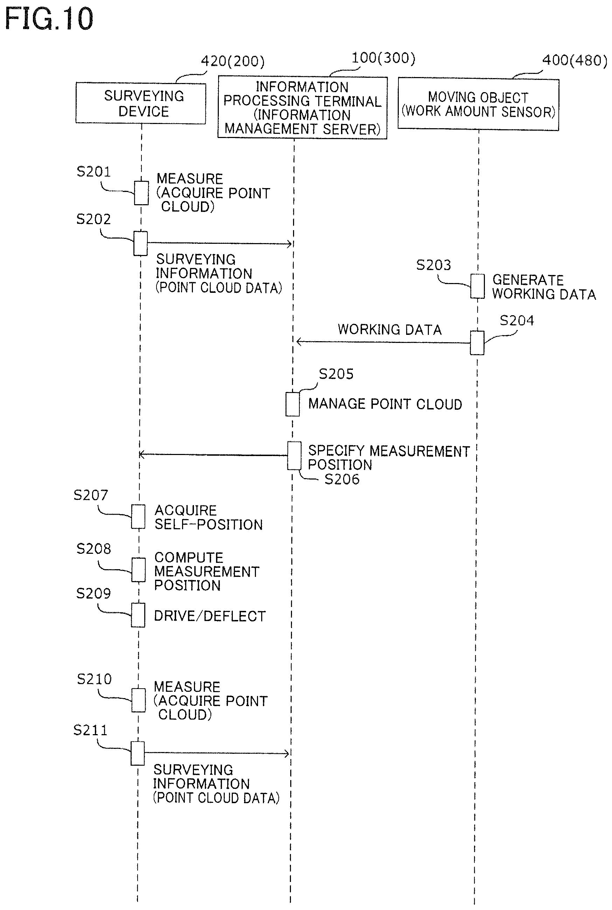

FIG. 10 is a flowchart illustrating the surveying method using the surveying system of the embodiment of the present disclosure and the flow of the surveying program processing. Unlike the complementary scanning based on the point cloud amount management shown in FIG. 4, a measurement position instruction form in which the three-dimensional point cloud data is updated mainly using the working data is described in this example. Thus, the flow of the processing in this example corresponds to the example where the moving object 400, the surveying device 420 mounted on the moving object 400, and the information processing device 100 or the information processing server 300 are provided as in the network configuration diagram shown in FIG. 3.

Step S201 and Step S202 are similar to Step S103 and Step S104 shown in FIG. 4. The description thereof will thus be omitted in FIG. 10.

In Step S203, the work of the moving object 400 is measured by the work amount sensor 480, and in this manner, the working data is generated from a working data generation unit 471. Specifically, in a case where the moving object 400 is, for example, a shovel among construction machines, working data including the position where digging is performed by a bucket, the time of digging, etc. is generated by operation of the shovel.

In Step S204, the moving object communication unit 460 of the moving object 400 transmits the working data to the information processing device 100 or the information processing server 300.

In Step S205, the point cloud management unit 126 refers to, using the work position information and the work time information included in the work history data, the time of acquisition of the three-dimensional point cloud data at the same position as the work position, and if the time of acquisition of the three-dimensional point cloud data is older than the work time, determines the position as a position for which the three-dimensional point cloud data needs to be newly acquired.

In Step S206, the measurement position specifying unit 127 transmits, to the surveying device 200, the work position determined by the point cloud management unit 126 as the position for which the point clouds need to be updated to the surveying device 200 as the position targeted for the measurement.

Steps S207 to S211 subsequent thereto have contents similar to those of Steps S108 to S112 shown in FIG. 4. The description thereof will thus be omitted.

As described above, the measurement position can be also specified by the measurement position specifying unit 127 based on the working data without management with reference to the point cloud amount.

As described above, in the embodiment of the present disclosure, the surveying system 1 for acquiring three-dimensional point cloud data, including an information processing device 100 and a surveying device 200, and further includes: a scanner unit 260 configured to perform a measurement to acquire the three-dimensional point cloud data on the surveying device 200; a measurement position specifying unit 127 configured to specify a measurement position for which the three-dimensional point cloud data needs to be acquired; a position acquisition unit 270 configured to acquire a self-position of the surveying device 200; and a measurement computing unit 223 configured to perform a computation to measure the measurement position from the self-position. The three-dimensional point cloud data thus can be efficiently acquired, and if there is any missing data at a certain point, the data can be acquired only from the point, thereby reducing the number of times of measurement and movement.

The surveying system 1 further includes a moving object 400 on which the surveying device 200 (420) is mounted, and the scanner unit 260 acquires the three-dimensional point cloud data while the moving object 400 is moving or stopped. With this configuration, the surveying device 200 (420) is mounted on the moving object 400 so that the data can be acquired without the need for the operator 2 oneself to transport the surveying device 200 while the moving object 400 is moving.

The surveying system 1 further includes: a surveying information acquisition unit 121 configured to acquire, from the surveying device 200, surveying information including the three-dimensional point cloud data associated with position information; an area setting unit 122 configured to set a point cloud amount management area; a segment setting unit 123 configured to divide the management area into predetermined unit segments; a point cloud amount calculation unit 124 configured to calculate a point cloud amount in a space of each of the unit segments; and a point cloud management unit 126 configured to detect a segment where a point cloud amount is less than a predetermined necessary point cloud amount among the segments of the management area, and the measurement position specifying unit 127 specifies, as the measurement position, a segment determined by the point cloud management unit 126 as a segment whose point cloud amount is insufficient. With this configuration, the segment whose point cloud amount is insufficient can be taken as the measurement position, and three-dimensional scanning can be performed to complement the point-cloud-insufficient segment. The three-dimensional point cloud data can be efficiently acquired.

The moving object 400 is the construction machine, and includes a work amount sensor 480 for measuring a work amount of the moving object 400, and a working data generation unit 471 configured to generate working data including work position information based on information measured by the work amount sensor 480, and the measurement position specifying unit 127 specifies a position at which a work has been performed previously as the measurement position, based on the work position information. With this configuration, scanning is performed for the position at which a landform has been changed due to the work by the construction machine so as to complement such a status upon updating thereof; therefore, the three-dimensional point cloud data can be updated to the latest status.

The surveying device 200 includes an inertial measurement unit 250 and a data sorting unit 224 configured to extract the three-dimensional point cloud data acquired at a timing of measuring a small vibration amount by the inertial measurement unit 250. With this configuration, the three-dimensional point cloud data that have been measured at the timing of measuring a high vibration amount and that have a probability of including a measurement error can be removed.

The surveying device 200 includes an inertial measurement unit 250 and a point cloud data generation unit 221 configured to generate the three-dimensional point cloud data from the data measured by the scanner unit 260 at the timing of measuring a smaller vibration amount than the predetermined value by the inertial measurement unit 250. With this configuration, the three-dimensional point cloud data without including data which may include a measurement error can be acquired.

One embodiment of the present disclosure has been described above. However, an aspect of the present disclosure is not limited to the foregoing embodiment.

For example, in the above-described embodiment, the scanner unit 260 of the surveying device 200, 420 is the laser scanner, but the scanner unit that performs measurement to acquire the three-dimensional point cloud data is not limited thereto. For example, light detection and ranging (LIDAR) for performing distance measurement by measurement of scattered light from a laser beam emitted in a pulse form may be used for the scanner unit. Alternatively, an imaging unit such as a camera may be provided as the scanner unit, and the point cloud data generation unit may generate the point cloud data from one or more images captured by the imaging unit using a so-called structure from motion (SfM) or photogrammetry method.

### DESCRIPTION OF REFERENCE CHARACTERS

- 1: Surveying Information Management System
- 2: Operator
- 100: Information Processing Device
- 110: Terminal Processing Unit
- 120: Terminal Storage Unit
- 121: Surveying Information Acquisition Unit
- 122: Area Setting Unit
- 123: Segment Setting Unit
- 124: Point Cloud Amount Calculation Unit
- 125: Point Cloud Amount Display Unit
- 126: Point Cloud Management Unit
- 127: Measurement Position Specifying Unit
- 130: Terminal Communication Unit
- 140: Terminal Input Unit
- 150: Terminal Display Unit
- 200: Surveying Device
- 210: Measuring Instrument Processing Unit
- 220: Measuring Instrument Storage Unit
- 221: Point Cloud Data Generation Unit
- 222: Actual Measurement Position Calculation Unit
- 223: Display Control Unit
- 230: Measuring Instrument Communication Unit
- 240: Measuring Instrument Operation Unit
- 250: Measuring Instrument Display Unit
- 260: Scanner Unit
- 261: Distance Measurement Unit
- 262: Deflection Unit
- 270: Position Acquisition Unit
- 281: Attitude Drive Unit
- 282: Attitude Detection Unit
- 300: Information Processing Server
- 400: Moving Object
- 410: Moving Object Terminal
- 420: Surveying Device
- 430: Target Device
- 440: GNSS Receiver
- 450: Inertial Measurement Device
- 460: Moving Object Communication Unit
- 470: Moving Object Control Unit
- 480: Work Amount Sensor
- DMA: Management Area
- GU: Unit Segment
- SP: Surveying Device Position

## Claims

1. A surveying system (1) for acquiring three-dimensional point cloud data, the surveying system (1) including an information processing device (100) and a surveying device (200), the surveying system (1) comprising:
a scanner unit (260) on the surveying device (200, 420), the scanner unit configured to perform a measurement to acquire the three-dimensional point cloud data;
a measurement position specifying unit (127) configured to specify a measurement position for which the three-dimensional point cloud data needs to be acquired;
a position acquisition unit (270) configured to acquire a self-position of the surveying device (420); and
a measurement computing unit (223) configured to perform a computation to measure the measurement position from the self-position,
**characterised by**
a surveying information acquisition unit (121) configured to acquire, from the surveying device (420), surveying information including the three-dimensional point cloud data associated with position information;
an area setting unit (122) configured to set a point cloud amount management area;
a segment setting unit (123) configured to divide the management area into predetermined unit segments;
a point cloud amount calculation unit (124) configured to calculate a point cloud amount in a space of each of the unit segments; and
a point cloud management unit (126) configured to detect a segment where the point cloud amount is less than a predetermined necessary point cloud amount among the segments of the management area,
wherein:
the measurement position specifying unit (127) is configured to specify, as the measurement position, a segment determined by the point cloud management unit (126) as a segment where the point cloud amount is insufficient,
the measurement computing unit (223) is configured to compute, from a relationship between a current self-position of the surveying device (200) acquired by the position acquisition unit (270) and the measurement position specified by the measurement position specifying unit (127), how an attitude and a deflection direction of the surveying device (200) are to be changed by drive of the surveying device (200) itself, and
based on the computation results of the measurement computing unit (223), the surveying device (200) is driven and the scanner unit (260) is deflected, and the three-dimensional point cloud data for the measurement position specified by the measurement position specifying unit (127) is acquired.

2. The surveying system of claim 1, further comprising:
a moving object (400) on which the surveying device (420) is mounted, wherein
the scanner unit (260) acquires the three-dimensional point cloud data while the moving object (400) is moving or stopped.

3. The surveying system of claim 2, wherein
the moving object (400) is a construction machine,
the moving object (400) includes:
a work amount sensor (480) for measuring a work amount of the moving object (400); and
a working data generation unit (471) configured to generate working data including work position information based on information measured by the work amount sensor (480), and
the measurement position specifying unit (127) specifies a position at which a work has been performed in a past as the measurement position, based on the work position information.

4. The surveying system of any one of claims 1 to34, wherein
the surveying device (420) includes:
an inertial measurement unit (250); and
a point cloud data generation unit (221) configured to generate the three-dimensional point cloud data from data measured by the scanner unit (260), only at a timing of measuring a smaller vibration amount than a predetermined value by the inertial measurement unit (250).

5. A surveying method for acquiring three-dimensional point cloud data by using an information processing device (100) and a surveying device (420), the surveying method comprising:
specifying, by a measurement position specifying unit (127), a measurement position for which three-dimensional point cloud data needs to be acquired;
acquiring a self-position of the surveying device (420) by a position acquisition unit (270) of the surveying device (420);
performing a computation to measure the measurement position from the self-position by a measurement computing unit (223); and
performing a measurement to acquire the three-dimensional point cloud data by a scanner unit (260) on the surveying device (200, 420),
**characterised by**
acquiring, by a surveying information acquisition unit (121) from the surveying device (420), surveying information including the three-dimensional point cloud data associated with position information;
setting, by an area setting unit (122), a point cloud amount management area;
dividing, by a segment setting unit (123), the management area into predetermined unit segments;
calculating, by a point cloud amount calculation unit (124), a point cloud amount in a space of each of the unit segments; and
detecting, by a point cloud management unit (126), a segment where the point cloud amount is less than a predetermined necessary point cloud amount among the segments of the management area,
wherein:
the measurement position specifying unit (127) specifies, as the measurement position, a segment determined by the point cloud management unit (126) as a segment where the point cloud amount is insufficient,
the measurement computing unit (223) computes, from a relationship between a current self-position acquired by the position acquisition unit (270) and the measurement position specified by the measurement position specifying unit (127), how an attitude and a deflection direction of the surveying device (200) are to be changed by drive of the surveying device (200) itself, and
based on the computation results of the measurement computing unit (223), the surveying device (200) is driven and the scanner unit (260) is deflected, and the three-dimensional point cloud data for the measurement position specified by the measurement position specifying unit (127) is acquired.

6. A surveying program for acquiring three-dimensional point cloud data by using an information processing device (100) and a surveying device (420), the surveying program comprising instructions which, when the program is executed by a computer, cause the computer to execute the method of claim 5.

## Patentansprüche

1. Vermessungssystem (1) zum Erfassen dreidimensionaler Punktwolkendaten, wobei das Vermessungssystem (1) eine Informationsverarbeitungsvorrichtung (100) und eine Vermessungsvorrichtung (420) umfasst, wobei das Vermessungssystem (1) Folgendes aufweist:
eine Scannereinheit (260) an der Vermessungsvorrichtung (200, 420), wobei die Scannereinheit dazu ausgebildet ist, eine Messung auszuführen, um die dreidimensionalen Punktwolkendaten zu erfassen;
eine Messpositions-Spezifizierungseinheit (127), die dazu ausgebildet ist, eine Messposition zu spezifizieren, für die die dreidimensionalen Punktwolkendaten erfasst werden müssen;
eine Positionserfassungseinheit (270), die dazu ausgebildet ist, eine Eigenposition der Vermessungsvorrichtung (420) zu erfassen; und
eine Messungsberechnungseinheit (223), die dazu ausgebildet ist, eine Berechnung auszuführen, um die Messposition aus der Eigenposition zu messen,
**gekennzeichnet durch**
eine Vermessungsinformations-Erfassungseinheit (121), die dazu ausgebildet ist, von der Vermessungsvorrichtung (420) Vermessungsinformation zu erfassen, die Positionsinformation zugeordnete dreidimensionale Punktwolkendaten beinhaltet;
eine Bereichseinstelleinheit (122), die dazu ausgebildet ist, einen Punktwolkenmengen-Verwaltungsbereich einzustellen;
eine Segmenteinstelleinheit (123), die dazu ausgebildet ist, den Verwaltungsbereich in vorbestimmte Segmenteinheiten aufzuteilen;
eine Punktwolkenmengen-Berechnungseinheit (124), die dazu ausgebildet ist, eine Punktwolkenmenge in einem Raum jedes der Einheitssegmente zu berechnen; und
eine Punktwolken-Verwaltungseinheit (126), die dazu ausgebildet ist, ein Segment unter den Segmenten des Verwaltungsbereichs zu detektieren, bei dem die Punktwolkenmenge kleiner ist als eine vorbestimmte erforderliche Punktwolkenmenge,
wobei die Messpositions-Spezifizierungseinheit (127) dazu ausgebildet ist, als Messposition ein Segment zu spezifizieren, das von der Punktwolken-Verwaltungseinheit (126) als Segment bestimmt wird, bei dem die Punktwolkenmenge nicht ausreichend ist,
wobei die Messungsberechnungseinheit (223) dazu ausgebildet ist, aus einer Beziehung zwischen einer von der Positionserfassungseinheit (270) erfassten aktuellen Eigenposition der Vermessungsvorrichtung (200) und der von der Messpositions-Spezifizierungseinheit (127) spezifizierten Messposition zu berechnen, wie ein Verhalten und eine Umlenkrichtung der Vermessungsvorrichtung (200) durch antriebsmäßiges Betätigen der eigentlichen Vermessungsvorrichtung (200) verändert werden müssen, und
wobei auf der Basis der Berechnungsergebnisse der Messungsberechnungseinheit (223) die Vermessungsvorrichtung (223) antriebsmäßig betätigt wird und die Scannereinheit (260) umgelenkt wird und die dreidimensionalen Punktwolkendaten für die von der Messpositions-Spezifizierungseinheit (127) spezifizierte Messposition erfasst werden.

2. Vermessungssystem nach Anspruch 1,
das ferner aufweist:
ein bewegliches Objekt (400), an die die Vermessungsvorrichtung (420) angebracht ist,
wobei die Scannereinheit (260) die dreidimensionalen Punktwolkendaten erfasst, während sich das bewegliche Objekt (400) bewegt oder gestoppt ist.

3. Vermessungssystem nach Anspruch 2,
wobei das bewegliche Objekt (400) eine Baumaschine ist,
wobei das bewegliche Objekt (400) aufweist:
einen Arbeitsmengensensor (480) zum Messen einer Arbeitsmenge des beweglichen Objekts (400); und
eine Arbeitsdaten-Erzeugungseinheit (471), die dazu ausgebildet ist, Arbeitsdaten einschließlich Arbeitspositionsinformation auf der Basis von von dem Arbeitsmengensensor (480) gemessener Information zu erzeugen, und
wobei die Messpositions-Spezifizierungseinheit (127) eine Position, an der in der Vergangenheit eine Arbeit ausgeführt worden ist, auf der Basis der Arbeitspositionsinformation als Messposition spezifiziert.

4. Vermessungssystem nach einem der Ansprüche 1 bis 3,
wobei die Vermessungsvorrichtung (420) aufweist:
eine Trägheitsmesseinheit (250); und
eine Punktwolkendaten-Erzeugungseinheit (221), die dazu ausgebildet ist, die von der Scannereinheit (260) gemessenen dreidimensionalen Punktwolkendaten nur zu einem Zeitpunkt zu erzeugen, zu dem von der Trägheitsmesseinheit (250) ein geringeres Schwingungsausmaß als ein vorbestimmter Wert gemessen wird.

5. Vermessungsverfahren zum Erfassen dreidimensionaler Punktwolkendaten unter Verwendung einer Informationsverarbeitungsvorrichtung (100) und einer Vermessungsvorrichtung (420), wobei das Vermessungsverfahren Folgende Schritte aufweist:
Spezifizieren einer Messposition, für die dreidimensionale Punktwolkendaten erfasst werden müssen, durch eine Messpositions-Spezifizierungseinheit (127);
Erfassen einer Eigenposition der Vermessungsvorrichtung (420) durch eine Positionserfassungseinheit (270) der Vermessungsvorrichtung (420);
Ausführen einer Berechnung zum Messen der Messposition aus der Eigenposition durch eine Messungsberechnungseinheit (223); und
Ausführen einer Messung zum Erfassen der dreidimensionalen Punktwolkendaten durch eine Scannereinheit (260) an der Vermessungsvorrichtung (200, 420),
**gekennzeichnet durch**
Erfassen von Vermessungsinformation, die die Positionsinformation zugeordneten dreidimensionalen Punktwolkendaten beinhaltet, von der Vermessungsvorrichtung (420) mittels einer Vermessungsinformations-Erfassungseinheit (121);
Einstellen eines Punktwolkenmengen-Verwaltungsbereichs mittels einer Bereichseinstelleinheit (122);
Aufteilen des Verwaltungsbereichs in vorbestimmte Segmenteinheiten mittels einer Segmenteinstelleinheit (123);
Berechnen einer Punktwolkenmenge in einem Raum von jeder der Segmenteinheiten mittels einer Punktwolkenmengen-Berechnungseinheit (124); und
mittels einer Punktwolken-Verwaltungseinheit (126) erfolgendes Detektieren eines Segments, in dem die Punktwolkenmenge geringer ist als eine vorbestimmte Punktwolkenmenge unter den Segmenten des Verwaltungsbereichs, wobei die Messpositions-Spezifizierungseinheit (127) als Messposition ein von der Punktwolken-Verwaltungseinheit (126) bestimmtes Segment als Segment spezifiziert, bei dem die Punktwolkenmenge nicht ausreichend ist,
wobei die Messungsberechnungseinheit (223) aus einer Beziehung zwischen einer von der Positionserfassungseinheit (270) erfassten aktuellen Eigenposition und der von der Messpositions-Spezifizierungseinheit (127) spezifizierten Messposition berechnet, wie ein Verhalten und eine Umlenkrichtung der Vermessungsvorrichtung (200) durch antriebsmäßiges Betätigen der eigentlichen Vermessungsvorrichtung (200) verändert werden müssen, und
wobei auf der Basis der Berechnungsergebnisse des Messungsberechnungseinheit (223) die Vermessungsvorrichtung (223) antriebsmäßig betätigt wird und die Scannereinheit (260) umgelenkt wird und die dreidimensionalen Punktwolkendaten für die von der Messpositions-Spezifizierungseinheit (127) spezifizierte Messposition erfasst werden.

6. Vermessungsprogramm zum Erfassen dreidimensionaler Punktwolkendaten unter Verwendung einer Informationsverarbeitungsvorrichtung (100) und einer Vermessungsvorrichtung (420), wobei das Vermessungsprogramm Anweisungen aufweist, die bei Ausführung des Programms durch einen Computer den Computer zum Ausführen des Verfahrens gemäß Anspruch 5 veranlassen.

## Revendications

1. Appareil de relevé (1) permettant d'acquérir des données de nuages de points tridimensionnels, l'appareil de relevé (1) incluant un dispositif de traitement des informations (100) et un dispositif de relevé (200), l'appareil de relevé (1) comprenant :
une unité de balayage (260) sur le dispositif de relevé (200, 420), l'unité de balayage étant configurée de manière à effectuer une mesure pour acquérir les données de nuages de points tridimensionnels ;
une unité de spécification de la position de mesure (127) configurée pour spécifier une position de mesure pour laquelle les données de nuages de points tridimensionnels doivent être acquises ;
une unité d'acquisition de position (270) configurée pour acquérir une position propre du dispositif de relevé (420) ; et
une unité de calcul de mesure (223) configurée pour effectuer un calcul afin de mesurer la position de mesure à partir de la position propre,
**caractérisé en ce qu'**il comprend
une unité d'acquisition d'informations de relevé (121) configurée pour acquérir, à partir du dispositif de relevé (420), des informations de relevé, notamment les données de nuages de points tridimensionnels associées aux informations de position ;
une unité de définition de zones (122) configurée pour définir une zone de gestion de la quantité de nuages de points ;
une unité de définition de segments (123) configurée pour diviser la zone de gestion en segments d'unité prédéterminés ;
une unité de calcul de la quantité de nuages de points (124) configurée pour calculer une quantité de nuages de points dans un espace de chacun des segments d'unité ; et
une unité de gestion des nuages de points (126) configurée pour détecter un segment où la quantité de nuages de points est inférieure à une quantité de nuages de points prédéterminée nécessaire parmi les segments de la zone de gestion,
dans lequel :
l'unité de spécification de la position de mesure (127) est configurée pour spécifier, en tant que position de mesure, un segment déterminé par l'unité de gestion des nuages de points (126) comme segment où la quantité de nuages de points est insuffisante,
l'unité de calcul de mesure (223) est configurée pour calculer, à partir d'une relation entre une position propre actuelle du dispositif de relevé (200) acquise par l'unité d'acquisition de position (270) et la position de mesure spécifiée par l'unité de spécification de la position de mesure (127), comment une attitude et une direction de déviation du dispositif de relevé (200) doivent être modifiées par l'entraînement du dispositif de relevé (200) lui-même, et
sur la base des résultats de calcul de l'unité de calcul de mesure (223), le dispositif de relevé (200) est entraîné et l'unité de balayage (260) est déviée, et les données de nuages de points tridimensionnels sont acquises pour la position de mesure spécifiée par l'unité de spécification de la position de mesure (127).

2. L'appareil de relevé selon la revendication 1, comprenant en outre :
un objet mobile (400) sur lequel est monté le dispositif de relevé (420),
dans lequel
l'unité de balayage (260) acquiert les données de nuages de points tridimensionnels tandis que l'objet mobile (400) se déplace ou est arrêté.

3. L'appareil de relevé selon la revendication 2, dans lequel
l'objet mobile (400) est un engin de chantier, l'objet mobile (400) comprenant :
un capteur de quantité de travail (480) pour mesurer une quantité de travail de l'objet mobile (400) ; et
une unité de génération de données de travail (471) configurée pour générer des données de travail, notamment des informations sur la position de travail en fonction des informations mesurées par le capteur de quantité de travail (480), et
l'unité de spécification de la position de mesure (127) spécifie une position à laquelle un travail a été effectué dans le passé en tant que position de mesure, sur la base des informations relatives à la position de travail.

4. L'appareil de relevé selon l'une quelconque des revendications 1 à 3, dans lequel
le dispositif de relevé (420) comprend :
une unité de mesure inertielle (250) ; et
une unité de génération de données de nuages de points (221) configurée pour générer les données de nuages de points tridimensionnels à partir des données mesurées par l'unité de balayage (260), uniquement au moment où l'unité de mesure inertielle (250) mesure une quantité de vibrations inférieure à une valeur prédéterminée.

5. Procédé de relevé permettant d'acquérir des données de nuages de points tridimensionnels au moyen d'un dispositif de traitement des informations (100) et d'un dispositif de relevé (420), le procédé de relevé comprenant les étapes suivantes :
spécifier, par une unité de spécification de la position de mesure (127), une position de mesure pour laquelle des données de nuages de points tridimensionnels doivent être acquises ;
acquérir une position propre du dispositif de relevé (420) par une unité d'acquisition de position (270) du dispositif de relevé (420) ;
effectuer un calcul afin de mesurer la position de mesure à partir de la position propre par une unité de calcul de mesure (223) ; et
effectuer une mesure afin d'acquérir les données de nuages de points tridimensionnels par une unité de balayage (260) sur le dispositif de relevé (200, 420),
**caractérisé en ce qu'**il comprend
l'acquisition, par une unité d'acquisition d'informations de relevé (121) du dispositif de relevé (420), d'informations de relevé, notamment des données de nuages de points tridimensionnels associées aux informations de position ;
la définition, par une unité de définition de zones (122), d'une zone de gestion d'une quantité de nuages de points ;
la division, par une unité de définition de segments (123), de la zone de gestion en segments d'unité prédéterminés ;
le calcul, par une unité de calcul de la quantité de nuages de points (124), d'une quantité de nuages de points dans un espace de chacun des segments d'unité ; et
la détection, par une unité de gestion des nuages de points (126), d'un segment où la quantité de nuages de points est inférieure à une quantité de nuages de points prédéterminée nécessaire parmi les segments de la zone de gestion,
dans lequel :
l'unité de spécification de la position de mesure (127) spécifie, en tant que position de mesure, un segment déterminé par l'unité de gestion des nuages de points (126) en tant que segment où la quantité de nuages de points est insuffisante,
l'unité de calcul de mesure (223) calcule, à partir d'une relation entre une position propre actuelle acquise par l'unité d'acquisition de position (270) et la position de mesure spécifiée par l'unité de spécification de la position de mesure (127), comment une attitude et une direction de déviation du dispositif de relevé (200) doivent être modifiées par l'entraînement du dispositif de relevé (200) lui-même, et
sur la base des résultats de calcul de l'unité de calcul de mesure (223), le dispositif de relevé (200) est entraîné et l'unité de balayage (260) est déviée, et les données de nuages de points tridimensionnels sont acquises pour la position de mesure spécifiée par l'unité de spécification de la position de mesure (127).

6. Programme de relevé permettant d'acquérir des données de nuages de points tridimensionnels au moyen d'un dispositif de traitement des informations (100) et d'un dispositif de relevé (420), le programme de relevé comprenant des instructions qui, lorsque le programme est exécuté par un ordinateur, amènent l'ordinateur à exécuter le procédé selon la revendication 5.
